(19) Europäisches Patentamt
European Patent Office
Office européen des brevets

(11) EP 0 663 539 B1

## (12) EUROPEAN PATENT SPECIFICATION

(45) Date of publication and mention
of the grant of the patent:
**22.04.1998 Bulletin 1998/17**

(51) Int Cl.$^6$: **F16D 23/06**

(21) Application number: **94309514.1**

(22) Date of filing: **19.12.1994**

(54) **Synchronizer clutch**

Synchronisier-Kupplung

Embrayage avec synchroniseur

(84) Designated Contracting States:
**AT DE ES FR GB IT NL SE**

(30) Priority: **27.12.1993 US 172789**

(43) Date of publication of application:
**19.07.1995 Bulletin 1995/29**

(73) Proprietor: **EATON CORPORATION**
**Cleveland Ohio 44114 (US)**

(72) Inventors:
• **Braun, Eugene Ralph**
**Royal Oak, Michigan 48073 (US)**

• **Olson, Otis John**
**Farmington Hills, Michigan 48334 (US)**

(74) Representative: **Douglas, John Andrew**
**Eaton House**
**Staines Road**
**Hounslow Middlesex TW4 5DX (GB)**

(56) References cited:
EP-A- 0 253 187          GB-A- 331 293
US-A- 3 548 983          US-A- 4 727 968
US-A- 5 078 244

Printed by Jouve, 75001 PARIS (FR)

## Description

### Field of the Invention

This invention relates to a synchronizer clutch.

### Background of the Invention

Synchronizer mechanisms, in particular Baulkring-type synchronizer mechanisms for use in multi-ratio transmissions are well known. Such mechanisms include pairs of friction and jaw members for respectively synchronizing and positive clutching a gear to a shaft, pre-energizer assemblies for engaging the friction members in response to initial engaging movement of a shift sleeve, a hub rotatably fixed to the shaft and having external spline teeth slidably receiving internal spline teeth of the shift sleeve which often defines one of the jaw member pairs, a baulkring having blocker teeth for arresting engaging movement of the shift sleeve until synchronization is reached and for transferring a shift force from the sleeve to increase the engaging force of the friction members.

It is also known in the multiple ratio transmission art that synchronizer mechanisms may be used to reduce shift time of all or some of the transmission gear ratios. It is also known that the shift effort required by a vehicle operator, i.e., force applied to a shift lever, may be reduced by use of synchronizer mechanisms of the self-energizing type. Since operator shift effort generally increases with vehicle size and weight, synchronizer mechanisms of the self-energizing type are especially important for trucks, particularly for heavy duty trucks. A baulkring-type synchronizer of the self-energizing type may be seen by reference to U.S. Patent 3,548,983. A pin-type synchronizer of the self-energizing type may also be seen by reference to U.S. Patent 5,092,439.

### Summary of the Invention

An object of this invention is to provide an improved synchronizer clutch.

According to the pre-characterising part of claim 1 of the invention a synchronizer clutch with self-energizing, as disclosed in US-A-3548983, frictionally synchronizes and positive connects first and second drives disposed for relative rotation about a common axis. The clutch includes first jaw means axially movable from a neutral position to an engaged position with second jaw means for positive connecting the drives in response to engaging movement of the first jaw means from a neutral position by an axially directed shift force ($F_o$) toward the second jaw means. A first friction surface is axially movable into engagement with a second friction surface in response to the engaging movement of the first jaw means for producing a synchronizing torque ($T_o$). A hub has a connecting means for the first jaw means (58) for allowing axial movement of the first jaw means (58) with respect to the hub (32) and allowing limited rotational movement of the first jaw means (58) with respect to the hub. The hub is affixed to the first drive and includes an outer circumference having a plurality of circumferentially spaced apart and axially extending first grooves slidably receiving first teeth extending radially from the first jaw means. A first baulkring includes the first friction surface and a plurality of first blocker surfaces. The baulkring is axially movable away from the hub toward the second friction surface. Blocker surfaces on the first jaw means engage first blocker surfaces to prevent asynchronous engagement of the first jaw means with the second jaw means. The hub includes a first plurality of angled hub surfaces. A plurality of self-energizing elements are mounted for fixed movement with the first jaw means and limited rotational movement relative to the hub. The elements are positioned to contact the angled hub surfaces for producing an additional axial force ($F_a$) in the direction of the shift force ($F_o$) due to reaction to the friction surface torque transmitted through the baulkring blocker surface thus producing increased axial force on the friction surface and increased torque for synchronizing than is available from shift force ($F_o$) alone.

The synchronizer clutch according to the invention is characterized by the hub including a plurality of axially extending second grooves interspaced between the first grooves and slidably receiving second teeth extending radially from the first jaw means. The first and second grooves respectively have at least a portion of the first and second teeth disposed therein during the neutral and engaged positions of the blockers. The grooves have a circumferential width relative to the teeth therein for allowing the relative rotation between the first jaw means and hub to effect engagement of the self-energizing means during the engaging movement of the first jaw means. A portion of the second grooves closely receive the second teeth when the first and second jaw means are engaged for preventing relative rotation between the first jaw means and hub.

### Brief Description of the Drawings

The synchronizer clutch of the invention is shown in the accompanying drawings in which:

Figure 1 is a sectional view of a double-acting baulkring-type synchronizer in a neutral position and disposed for rotation about the axis of a shaft;
Figure 2 is relief view of a broken away portion of a hub member looking axially leftward relative to the shaft in Figure 1;
Figures 3-8 illustrate several stages of operation of the synchronizer components looking radially inward along line 3-3 in Figure 1; and
Figure 9 is a graphical representation of axial forces and torques acting across blocker surfaces of the synchronizer mechanism.

## Detailed Description of the Drawings

The term "synchronizer clutch mechanism" shall designate a clutch mechanism utilized to non-rotatably couple a selected ratio gear to a shaft by means of a positive clutch in which attempted engagement of the positive clutch is prevented until members of the positive clutch are brought to substantially synchronous rotation by a synchronizing friction clutch associated with the positive clutch. The term "self-energizing" shall designate a synchronizer clutch mechanism which includes ramps or cams or the like to increase the engaging force of the synchronizing clutch in proportion to the synchronizing torque of the friction clutch.

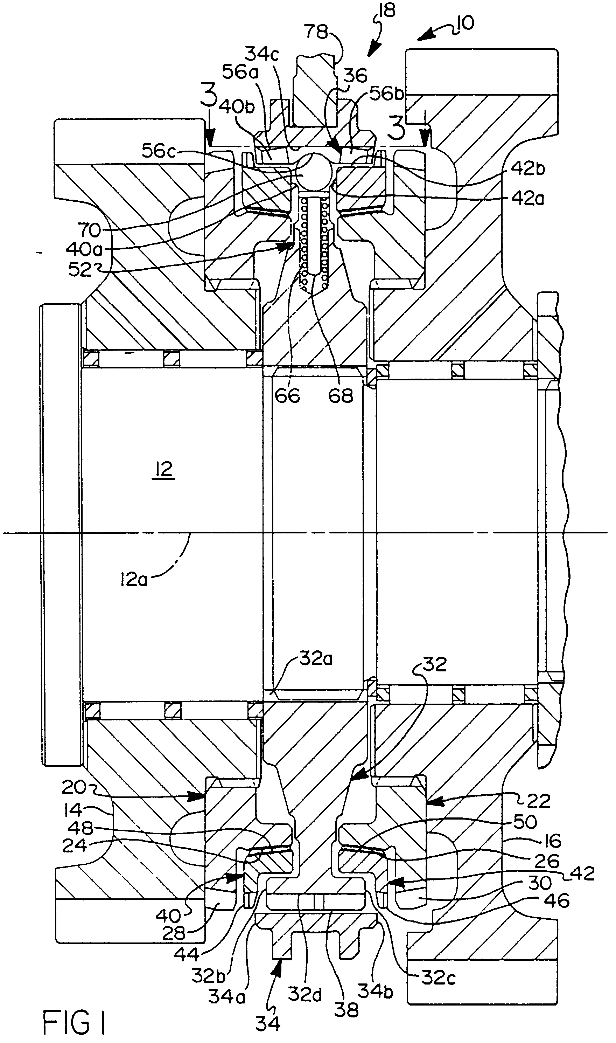

Looking now at Figures 1-8, therein is shown a gear and synchronizer assembly 10 which forms part of a multi-ratio change speed transmission. Assembly 10 includes a partially shown shaft 12 mounted for rotation about a central axis 12a, axially spaced apart gears 14,16 supported on the shaft for rotation relative thereto and secured against axial movement relative to the shaft in known manner, and a double-acting synchronizer clutch mechanism 18.

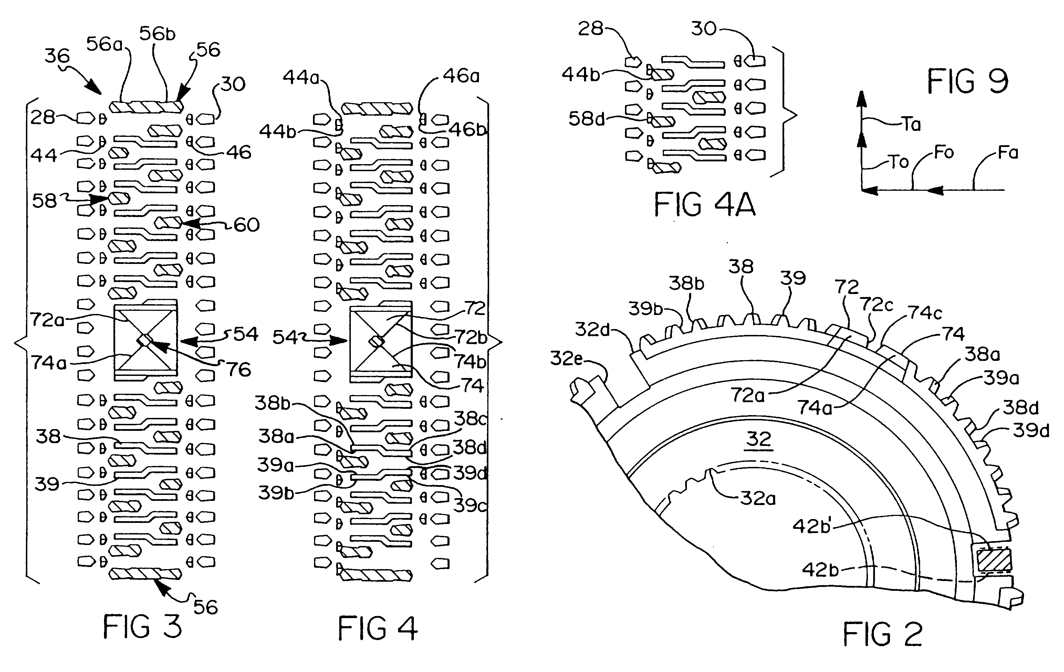

The synchronizer clutch mechanism 18 includes annular member 20,22 axially and rotatably affixed to gear 14,16 in known manner, gear friction surfaces 24,26 herein integral with members 20,22, gear jaw teeth 28,30 herein integral with members 20,22, a hub member 32 axially and rotatably affixed at a central opening 32a hereof to shaft 12 and having axially oppositely facing ends 32b,32c and an outer circumference 32d, a shift sleeve 34 having axially oppositely facing ends 34a,34b defining the sleeve length, sets of internal spline teeth 36 defined on a central opening or an inner circumference 34c of sleeve 34, sets of external splines 38,39 defined on the outer circumference 32d of hub 32, baulkrings 40,42, blocker teeth 44,46 and friction surfaces 48,50 herein integral with baulkrings 40,42, pre-energizer assemblies 52, and self-energizer assemblies 54 best seen in Figures 3-8. Herein, the synchronizer includes three circumferentially spaced apart pre-energizer assemblies and three self-energizing assemblies circumferentially interposed between pre-energizer assemblies. Each blocker tooth respectively includes angled blocker surfaces 44a,44b and 46a,46b.

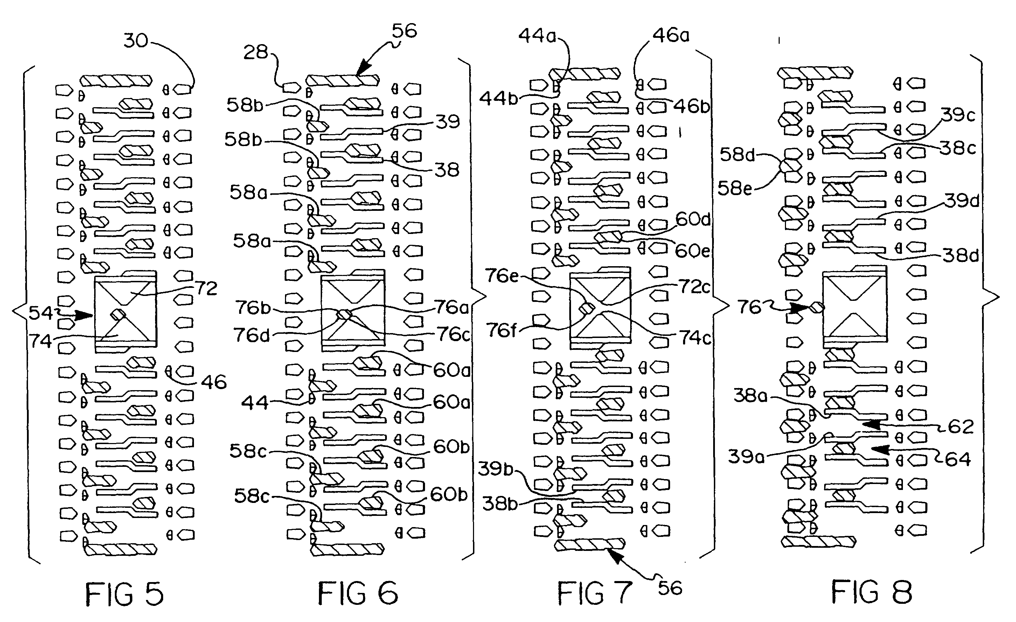

The sets of internal spline teeth 36 comprise three teeth 56 extending the axial length of shift sleeve 34, three first sets 58 of eight teeth each circumferentially positioned between teeth 56, and three second sets 60 of eight teeth each also circumferentially positioned between teeth 56. Each set may include a greater or lesser number of teeth. Figures 3-8 each illustrate two of the teeth 56 and the eight teeth of each first and second set 58,60. Each tooth 56 has a jaw tooth portion 56a,56b at its opposite ends and a detent groove 56c for the pre-energizer assembly 52. The first and second sets of teeth 58,60 include four teeth 58a,60a of intermediate length, two short teeth 58b,60b, and two long teeth 58c, 60c. Each of the teeth 58,60,56a,56b include angled blocker surfaces 58d,58e and 60d,60e which cooperate with the blocker surface of blocker teeth 44,46 in known manner. Alternatively, teeth 58,60 may all be of intermediate length. Herein, the long teeth are to ensure disengagement of teeth 58 and 60 from teeth 28,30 as may be seen by reference to Figure 8. Therein, long teeth remain engaged with blocker teeth 44 while they engaged with jaw teeth 28, thereby ensuring disengaging movement of sleeve 34 without interference by the back sides of the blocker teeth. Other ways may be used to ensure disengagement, for example, the back sides of the blocker teeth may have angled surfaces. Flank surfaces of teeth 56a,56b,58,60 and 28,30 are provided with an antibackout or locking angle feature to prevent inadvertent disengagement of the teeth. Details of this feature may be seen by reference to U.S. Patent 4,727,968.

The external sets of splines 38,39 define first and second sets of alternately spaced grooves 62,64 respectively receiving the first and second sets of teeth 58,60. Spline flank surfaces 38a,39a and 38c,39c of axially extending portions of each first and second groove 62,64 have a circumferential spacing relative to teeth 58,60 to allow limited relative rotation between the sleeve and hub for effecting engagement of the self-energizing assemblies 54, as explained hereinafter. Flank surfaces 38b,39b and 38d,39d of axially extending portions at the other end of each second and first groove 64,62 having a closer circumferential spacing relative to teeth 60,58 for preventing relative rotation between the sleeve and hub when one of the sets of teeth is engaged with the associated jaw teeth affixed to one of the gears.

Each pre-energizer assembly 52, which is known in the art, includes a helical compression spring 66 and plunger 68 disposed in a radially extending blind bore in hub 32 and biasing a roller or ball 70 (herein a roller) into the annular detent groove 56c in shift sleeve splines 36. Pre-energizer assembly 52 resiliently positions shift sleeve 34 in the neutral position shown in Figures 1 and 3. Rollers 70 are axially spaced between abutment surfaces 40a,42a defined by tabs 40b,42b extending from baulkrings 40,42 into abutment recesses 32e of hub 32 with free circumferential play in known manner for limiting relative rotation of the baulkrings relative to the hub.

The self-energizing assemblies 54 each include a first projection 72 extending radially outward form the hub outer circumferential surface 32d and defining V-shaped or angled self-energizing surfaces 72a,72b facing circumferentially in one direction and oblique to a plane normal to shaft axis 12a, a second projection 74 extending radially outward from the hub outer circumferential surface 32d and defining V-shaped or angled self-energizing surfaces 74a,74b oblique to the plane and circumferentially facing surfaces 72a,72b with a recess therebetween of hourglass like shape when viewed radially relative to the shaft axis, and a projection 76 extending radially inward from the sleeve inner circumferential surface 34c and into the hourglass recess. Projection 76 includes angled self-energizing surfaces 76a,76b,76c,76d respectively disposed parallel to surfaces 72a,72b,74a,74b. The parallel self-energizing surfaces, when engaged, provide an additive axial force ($F_a$) to decrease synchronization time and/or decrease operator shift effort. Each projection 76 also includes nonself-energizing surfaces 76e,76f normal to the plane and respectively operative in the shift sleeve neutral position to engage nonself-energizing surfaces 72c,74c parallel thereto. The nonself-energizing surfaces prevent unwanted activation of the self-energizing surfaces in the event there is some amount of torque produced by one of the cone clutches, e.g., viscous shear of oil between the cone clutch friction surfaces may produce a torque that could activate the ramps.

When it is desired to couple either gear to the shaft, an appropriate and unshown shift mechanism, such as disclosed in U.S. Patent 4,920,815, moves shift sleeve 34 axially via a partially shown shift fork 78 along the axis of shaft 12 either left to couple gear 14 or right to couple gear 16. Herein, the left and right directions are taken as positive and negative directions, respectively. The shift mechanism may be manually moved by an operator through a linkage system, may be selectively moved by an actuator, or may be moved by means which automatically initiate shift mechanism movement and which also controls the magnitude of the force applied by the shift mechanism. When the shift mechanism is manually moved, pre-energizer assemblies apply a pre-energizer force proportional to the force applied by the operator to the shift sleeve. Whether manually or automatically applied, the force is applied to the shift sleeve in an axial direction and is proportional to the force ($F_o$) in Figure 9. The pre-energizer force, depending on direction of shift sleeve movement by the shift force ($F_o$), moves either friction surface 48 or 50 into initial engagement with its associated friction surface to clock the associated baulkring to a position relative to hub 32 for positioning the blocker surfaces and the self-energizing surfaces in a manner explained hereinafter.

Initial leftward axial movement (positive) of shift sleeve 34 by the operator shift force $+F_o$ is transmitted by pre-energizer rollers 70 to baulkring 40 via tab abutment surfaces 40a to effect initial frictional engagement of movable cone surface 48 with gear cone surface 24. The initial engagement force of the cone surfaces is, of course, a function of the force of spring 66 and the angles of the walls of detent grooves 56c. The initial frictional engagement (provided an asynchronous condition exists and momentarily ignoring the effect of the self-energizing surfaces) produces an initial cone clutch engaging force and synchronizing torque $T_o$ which ensures limited relative rotation between shift sleeve 34 and baulkring 40, and hence, movement of the blocker teeth 44 to a position wherein the correct angled blocker surfaces of the blocker teeth engage the correct angled blocker surfaces of spline teeth 58. As shown in Figures 4 and 5, when the blocker surfaces are engaged, the full operator shift force $+F_o$ on shift sleeve 34 is transmitted to friction surfaces 24,48 via angled blocker surfaces 44b,58d, whereby the cone clutch is engaged by the full force of the operator shift force $+F_o$ to provide the operator synchronizer torque $T_o$. This operator synchronizing torque $T_o$ is represented by arrow $T_o$ in Figure 9. Since the blocker surfaces are disposed at angles relative to the axial direction of operator shift force $+F_o$, they produce a counter force or unblocking torque which is counter to the synchronizing torque from the cone clutch but of lesser magnitude during asynchronous conditions. As substantial synchronism is reached, the synchronizing torque drops below the unblocking torque, whereby the blocker teeth move out of engagement to allow continued axial movement of the shift sleeve and engagement of movable jaw teeth 58 with gear jaw teeth 28.

Tabs 40b,42b normally have enough free play to allow angled blocker surfaces 44a,44b and 46a,46b to rotate enough to initially make full contact with the respective mating angled blocker surfaces 58d,58e and 60d, 60e. Such initial full contact for surfaces 44b,58d is shown in Figure 4. During tests of synchronizer clutch mechanism 18 with such initial full contact of the blocker surfaces, premature unblocking occurred from time to time. The premature unblocking was prevented by increasing the amount of free play so that the blocker surfaces initially contacted as shown in Figure 4A. Herein, this was done by decreasing the circumferential width of the tabs, as shown in Figure 2, wherein phantom lines 42b illustrate the original circumferential width and solid lines 42b' illustrate the reduced circumferential width.

Still ignoring the effects of the self-energizing ramps, cone clutch torque provided by the force $F_o$ is expressed by the following equation:

$$T_o = F_o R_c \mu_c / \sin\alpha$$

where:

$R_c$ = the mean radius of the cone friction surface,
$\mu_c$ = the coefficient of friction of the cone friction surface, and
$\alpha$ = the angle of the cone friction surfaces.

Looking now at the affects of the self-energizing surfaces and referring particularly to Figures 3-8, the synchronizing torque $T_o$, due to the operator applied axial shift force $+F_o$, is of course transmitted to shift sleeve 34 by the angled blocker surfaces and is reacted to shaft 12 across the self-energizing surfaces. The self-energizing ramp surfaces, when engaged, limit rotation of the shift sleeve relative to shaft 12 and produce the axial force component or axial additive force $+F_a$ acting on

the shift sleeve in the same direction as shift force $+F_o$, thereby further increasing the engaging force of the cone clutch to provide an additive synchronizing torque $T_a$ which adds to the torque $T_o$.

Figure 3 illustrates a "neutral position" of all synchronizer components. However, at the start of a shift blocker teeth 44,46 may be circumferentially positioned any place between the limits allowed by baulkring tabs 40b,42b and hub recesses 32e. Initial leftward axial movement of shift sleeve 34 by the operator shift force $+F_o$ engages cone clutch surfaces 24,48 as previously described. The components of Figure 4 are in a "pre self-energized position" wherein the friction surfaces are engaged enough to start transmitting torque and start to rotate baulkring 40 relative to the hub and shift sleeve enough to engage blocker surfaces 44b,58d but not enough to engage self-energizing surfaces 74a,76c. In the "blocking/self-energizing position" of Figure 5, full operator shift force $+F_o$ is transmitted across the blocker surfaces and the torque $T_o$ resulting therefrom is reacted to shaft 12 via now engaged self-energizing surfaces 74a,76c.

The engaged self-energizing surfaces, as previously mentioned, produce the axial additive force $+F_a$ acting in the same direction as operator shift force $+F_o$ and transmitted across the engaged blocker surfaces, thereby further increasing the engaging force of the friction surfaces to provide an additive synchronizing torque which adds to the torque $T_o$. Figure 9 graphically illustrates the sum of the axial forces $+F_o$ plus $+F_a$ engaging the clutch friction surfaces and the sum of the synchronizing torques $T_o$ plus $T_a$ produced by the clutch friction surfaces. For a given operator shift force $+F_o$ and an operator synchronizing torque $T_o$, the magnitude of the axial additive force is preferably a function of the angle of the engaged self-energizing ramp surfaces. This angle is preferably great enough to produce an additive force $+F_a$ of magnitude sufficient to increase synchronizing torque and decrease synchronizing time in response to a given moderate shift effort by the operator. However, this angle is also preferably low enough to produce a controlled axial additive force $+F_a$, i.e., the force $+F_a$ should increase or decrease in response to the force $F_o$ increasing or decreasing. If the ramp angle is too great, the ramps are self-locking rather than self-energizing; hence, once initial engagement of the cone clutch is effected, the force $+F_a$ will rapidly and uncontrollably increase independent of the force $+F_o$, thereby driving the cone clutch toward lockup. Self-locking rather than self-energizing decreases shift quality or shift feel, may over stress synchronizer components, may cause over heating and rapid wear of the cone clutch surfaces, and may even override operator movement of the shift lever.

If no additive axial force is preferred for an up or downshift of a gear, the ramp surfaces for the up or downshift may be made parallel to the axis of shaft 12. For example, if ramp surfaces 74a,76c are made paral-lel, no additive force $F_a$ is provided for the illustrated shift.

The main variables for calculating self-energizing surface angles for providing additive axial forces $F_a$ are cone clutch angle, cone clutch coefficient of friction, mean radii ratio of the cone clutch and the self-energizing ramps, ramp coefficient of friction, and angle of the self-energizing surfaces. Further details for calculating and controlling self-energizing or boost forces may be obtained by reference to U.S. Patent 5,092,439.

Figure 6 illustrates a "boosted/unblocked position" which occurs immediately after unblocking torque has separated the blocking surfaces. Self-energizing which occurs in this position may be due to inertia and/or while there is less than complete disengagement of the cone clutch. The assist force helps to restart axial engaging movement of jaw teeth 58 toward engagement with jaw teeth 28 as unblocking occurs and helps move the jaw teeth into engagement when the V-shaped ends of teeth 58 and 28 engage. The assist force lessens what is known as shift notchiness by decreasing the need for the operator to move the shift lever with extra effort to finish a shift as unblocking occurs, i.e., the assist force facilitates smooth and relatively effortless completion of shifts. Figure 7 illustrates an "end of boost position" and Figure 8 illustrates a full "engaged position" of jaw teeth 58,28.

A preferred embodiment of the baulkring type synchronizer mechanism with self-energizing has been disclosed. The following claims are intended to cover the inventive portions of disclosed mechanism.

## Claims

1. A synchronizer clutch (18) for frictionally synchronizing and positive connecting first and second drives (12,14) disposed for relative rotation about a common axis (12a); the clutch including:

first jaw means (58) axially movable from a neutral position to an engaged position with second jaw means (28) for positive connecting the drives in response to engaging movement of the first jaw means (58) from a neutral position by an axially directed shift force ($F_o$) toward the second jaw means (28); a first friction surface (48) axially movable into engagement with a second friction surface (24) in response to the engaging movement of the first jaw means (58) for producing a synchronizing torque ($T_o$); a hub (32) with a connecting means to the first jaw means (58) for allowing axial movement of first jaw means (58) with respect to the hub (32) and allowing limited rotational movement of first jaw means (58) with respect to the hub (32) affixed to the first drive (12) and including an outer circumference having a plurality of circumferentially spaced apart and axially extending first grooves (62) slidably receiving first teeth extending radially from the first jaw means;

a first baulkring (40) including the first friction surface (48) and a plurality of first blocker surfaces (44b), the baulkring being axially movable away from the hub (32) toward the second friction surface (24); blocker surfaces (58d) on the first jaw means (58) to engage first blocker surfaces (44b) to prevent asynchronous engagement of the first jaw means (58) with the second jaw means (28);

the hub (32) including a first plurality of angled hub surfaces (74a);

a plurality of self-energizing elements (76) mounted for fixed movement with the first jaw means (58) and limited rotational movement relative to the hub (32), the elements positioned to contact the angled hub surfaces (74a) for producing an additional axial force ($F_a$) in the direction of the shift force ($F_o$) due to reaction to the friction surface (48) torque transmitted through the baulkring (40) blocker surface (44b) thus producing increased axial force on the fnction surface (48) and increased torque for synchronizing than is available from shift force ($F_o$) alone; characterized by:

the hub (32) including a plurality of axially extending second grooves interspaced between the first grooves (62) and slidably receiving second teeth extending radially from the first jaw means(58), the first and second grooves (62,64) respectively having at least a portion of the first and second teeth (58,60) disposed therein during the neutral and engaged positions of the blockers (44,58d), the grooves having a circumferential width (38a,39a and 38c, 39c) relative to the teeth therein for allowing the relative rotation between the first jaw means and hub to effect engagement of the self-energizing means (72,74) during the engaging movement of the first jaw means (58), and a portion (38b,39b) of the second grooves (64) closely receiving the second teeth (60) when the first and second jaw means are engaged for preventing relative rotation between the first jaw means and hub.

2. The clutch of claim 1 wherein the first jaw means (58) is attached to a shift sleeve (34) having an axial length, the first jaw means being the first teeth and the first teeth length is less than one-half the length of the shift sleeve.

3. The clutch of claim 2 wherein the second teeth are attached to the shift sleeve (34) and have a length less than one-half of shift sleeve length.

4. The clutch of claim 1 wherein the first grooves have a circumferential width about one and one-half the circumferential width of the first jaw means (58) when the shift sleeve is in the neutral position.

5. The clutch of claim 1 wherein the first grooves prevent the limited rotation when the second teeth are engaged with a fourth jaw means (30) to limit backlash or free play between the first drive and a third drive (12,16).

6. The clutch claim 1, wherein the self-energizing elements (76) include:

a plurality of the self-energizing surfaces (76d) formed in the shift sleeve inner circumference (34c) and circumferentially spaced apart.

7. The clutch of claim 1, wherein the hub (32) and at least one of the self-energizing elements (76) each include a non-boost surface (72c,76e) extending perpendicular to a rotational plane of the hub and engaged when the first jaw means is in a neutral position.

8. The clutch of claim 1, wherein:

the first baulkring (40) includes an abutment means (40b) for limiting rotation of the baulkring (40) relative to the hub (32) and means (42b') for increasing rotation of the baulkring (40) relative to the hub (32) for changing initial contact of the blocker surfaces from substantially full initial contact to a reduced initial contact.

9. The clutch mechanism of claim 1, further including:

third jaw means (60) being the second teeth and axially movable from the neutral position to an engaged position with fourth jaw means (30) for positive connecting the first drive to a third drive in response to engaging movement of the first jaw means by an axially directed shift force ($F_o$) toward the fourth jaw means (30);

a third friction surface (50) axially movable into engagement with a fourth friction surface (26) in response to the engaging movement of the first jaw means for producing a synchronizing torque ($T_o$);

a second baulkring (42) including a third friction surface (50) and a plurality of second blocker surfaces(46b), the baulkring (42) being axially movable away from the hub (32) toward the fourth friction surface(26); blocker surfaces (60d) on the second jaw means (60) operative to engage the second blocker surfaces to prevent asynchronous engagement of the first jaw means (60) with the second jaw means (30),:

a plurality of self-energizing elements (76) mounted for fixed movement with the second jaw (60) means and the limited rotational movement relative to the hub(32), the elements (76) positioned to contact the angled hub surfaces (74) for producing an additional axial force ($F_a$) in the direction of the shift force ($F_o$) toward the fourth jaw means (30) due to reaction to the friction surface torque transmitted through the baulkring blocker surface (46b) thus producing increased axial force on the friction surface (50) and increased torque for synchronizing than is available from shift force ($F_o$) alone.

## Patentansprüche

1. Eine Synchronisierkupplung (18) zur reibungsmäßigen Synchronisierung und positiven Verbindung erster und zweiter zur Relativdrehung um eine gemeinsame Achse (12a) angeordnete Antriebe (12, 14), wobei die Kupplung folgendes aufweist:

erste Klauenmittel (58) axial bewegbar von einer Neutralposition in eine Eingriffsposition mit zweiten Klauenmitteln (28) zur positiven Verbindung der Antriebe ansprechend auf die Eingriffsbewegung der ersten Klauenmittel (58) aus einer Neutralposition durch eine axial gerichtete Schaltkraft ($F_o$) zu den zweiten Klauenmitteln (28);

eine erste axial in Eingriff mit einer zweiten Reibungsoberfläche (24) bewegbare Reibungsoberfläche (58), und zwar ansprechend auf die Eingriffsbewegung der ersten Klauenmittel (58) zur Erzeugung eines Synchronisierdrehmoments ($T_o$);

eine Nabe (32) mit Verbindungsmitteln zu den ersten Klauenmitteln (58), um eine Axialbewegung der ersten Klauenmittel (58) bezüglich der Nabe (32) zu gestatten, und um eine begrenzte Drehbewegung der ersten Klauenmittel (58) bezüglich der Nabe (32) zu gestatten, und zwar befestigt an dem ersten Antrieb (12) und mit einem Außenumfang, der eine Vielzahl von umfangsmäßig beabstandeten und sich axial erstreckenden ersten Nuten (32) aufweist, die gleitend erste Zähne aufnehmen, die sich radial von den ersten Klauenmitteln erstrecken;

ein erster Ring (Sperring) (40) einschließlich der ersten Reibungsoberfläche (48) und mit einer Vielzahl von ersten Blockieroberflächen (44b), wobei der Ring von der Nabe (32) weg axial zur zweiten Reibungsoberfläche (24) bewegbar ist; Blockieroberflächen (58d) auf den ersten Klauenmitteln (58) zum Eingriff mit den ersten Blokkieroberflächen (44b) zur Verhinderung eines asynchronen Eingriffs der ersten Klauenmittel (58) mit den zweiten Klauenmitteln (28);

wobei die Nabe (32) eine erste Vielzahl von abgewinkelten Nabenoberflächen (74a) aufweist;

eine Vielzahl von selbst-erregbaren Elementen (76) angebracht zur festen Bewegung mit den ersten Klauenmitteln (58) und begrenzter Drehbewegung bezüglich der Nabe (32), wobei die Elemente zur Kontaktierung der abgewinkelten Nabenoberfläche (74a) positioniert sind, und zwar zur Erzeugung einer zusätzlichen Axialkraft ($F_a$) in Richtung der Schaltkraft ($F_o$) infolge der Reaktion auf das Reibungsoberflächen (48) Drehmoment übertragen durch die Ring (40) Blockieroberfläche (44b), auf welche Weise eine vergrößerte Axialkraft auf die Reibungsoberfläche (48) erzeugt wird und erhöhtes Drehmoment zum Synchronisieren verfügbar ist als dies von der Schaltkraft ($F_o$) alleine verfügbar ist; gekennzeichnet durch:

die Nabe (32) weist eine Vielzahl von sich axial erstreckenden zweiten Nuten auf, die in den Zwischenräumen zwischen den ersten Nuten (62) angeordnet sind und gleitend zweite Zähne, die sich radial von den ersten Klauenmitteln (58) erstrecken, aufnehmen, wobei die ersten bzw. zweiten Nuten (62, 64) mindestens einen Teil der ersten und zweiten Zähne (58, 60) darinnen während der neutralen und Eingriffspositionen der Blockiermittel (44, 58d) aufweisen, wobei die Nuten eine Umfangsbreite (38a, 39a und 38c, 39c) bezüglich der Zähne darinnen aufweisen, um die Relativdrehung zwischen den ersten Klauenmitteln und der Nabe zu gestatten, um den Eingriff der selbst-erregenden Mittel (72, 74) während der Eingriffsbewegung der ersten Klauenmittel (58) zu bewirken, und wobei ein Teil (38b, 39b) der zweiten Nuten (64) die zweiten Zähne (60) eng dann aufnimmt, wenn die ersten und zweiten Klauenmittel im Eingriff stehen, um die Relativdrehung zwischen den ersten Klauenmitteln und der Nabe zu verhindern.

2. Kupplung nach Anspruch 1, wobei die ersten Klauenmitteln (58) an einer Schalthülse (34) befestigt sind, die eine Axiallänge besitzt, und wobei die ersten Klauenmittel die ersten Zähne und die erste Zahnlänge kleiner als die Hälfte der Länge der Schalthülse ist.

3. Kupplung nach Anspruch 2, wobei die zweiten Zähne an der Schalthülse (34) befestigt sind und eine Länge besitzen, die kleiner ist als die Hälfte der Schalthülsenlänge.

4. Kupplung nach Anspruch 1, wobei die ersten Nuten eine Umfangsbreite von ungefähr ein und ein Halb der Umfangsbreite der ersten Klauenmittel (58) aufweisen, wenn die Schalthülse sich in der Neutralposition befindet.

5. Kupplung nach Anspruch 1, wobei die ersten Nuten die begrenzte Drehung dann verhindern, wenn die zweiten Zähne mit vierten Klauenmitteln (30) in Eingriff stehen, um den Rücklauf oder das freie Spiel zwischen dem ersten Antrieb und einem dritten Antrieb (12, 16) zu begrenzen.

6. Kupplung nach Anspruch 1, wobei die selbst-erregenden Elemente (76) folgendes aufweisen:
eine Vielzahl von selbst-erregenden Oberflächensegmenten (76d), gebildet im Schalthülseninnenumfang (34c) und umfangsmäßig beabstandet.

7. Kupplung nach Anspruch 1, wobei die Nabe (32) und mindestens eines der selbst-erregenden Elemente (76) jeweils eine Nicht-Verstärkungs- oder Nicht-Vergrößerungsoberfläche (72c, 76e) aufweisen, die sich senkrecht zu einer Rotationsebene der Nabe erstreckt und im Eingriff steht, wenn die ersten Klauenmittel sich in einer Neutralposition befinden.

8. Kupplung nach Anspruch 1, wobei
der erste Ring (40) Anschlagmittel (40b) zur Begrenzung der Drehung des Rings (40) bezüglich der Nabe (32) und Mittel (42b') aufweist zur Vergrößerung der Drehung des Rings (40) bezüglich der Nabe (32) zur Änderung der Anfangsberührung der Blockieroberflächen von einem im wesentlichen vollen Anfangskontakt auf einen reduzierten Anfangskontakt.

9. Kupplungsmechanismus nach Anspruch 1, wobei ferner folgendes vorgesehen ist:

dritte Klauenmittel (60) sind die zweiten Zähne und axial bewegbar von der Neutralposition zu einer Eingriffsposition mit vierten Klauenmitteln (30) zur positiven Verbindung des ersten Antriebs mit einem dritten Antrieb ansprechend auf die Eingriffsbewegung der ersten Klauenmitteln durch eine axial gerichtete Schaltkraft $(F_o)$ zu den vierten Klauenmitteln (30);

eine dritte Reibungsoberfläche (50) axial bewegbar in Eingriff mit einer vierten Reibungsoberfläche (26) ansprechend auf die Eingriffsbewegung der ersten Klauenmittel zur Erzeugung einer Synchronisationsdrehmoments $(T_o)$;

ein zweiter Ring (42) einschließlich einer dritten Reibungsoberfläche (50) und einer Vielzahl von zweiten Blockieroberflächen (46b), wobei der Ring (42) axial von Lager (32) weg zur vierten Reibungsoberfläche (26) bewegbar ist;

wobei ferner die Blockieroberflächen (60d) auf den zweiten Klauenmitteln (60) betriebsmäßig mit den zweiten Blockieroberflächen in Eingriff stehen, um asynchronen Eingriff der ersten Klauenmittel (60) mit den zweiten Klauenmitteln (30) zu verhindern;

eine Vielzahl von selbst-erregenden Elementen (76) angebracht für feste Bewegung mit der den zweiten Klauen(60) Mitteln und die begrenzte Drehbewegung relativ zur Nabe (32), wobei die Elemente (76) zur Kontaktierung der abgewinkelten Nabenoberflächen (74) positioniert sind, und zwar zur Erzeugung einer zusätzlichen Axialkraft $(F_a)$ in Richtung der Schaltkraft $(F_o)$ zu den vierten Klauenmitteln (30) hin, und zwar infolge der Reaktion auf das Reibungsoberflächendrehmoment übertragen durch die Ringblockieroberfläche (46b), auf welche Weise eine vergrößerte Axialkraft an der Reibungsoberfläche (50) erzeugt wird und ein vergrößertes Drehmoment zum Synchronisieren als es allein von der Schaltkraft $(F_o)$ verfügbar ist.

## Revendications

1. Embrayage synchroniseur (18) pour synchroniser par friction et relier directement un premier et un second organes de transmission (12,14) disposés de manière à tourner l'un par rapport à l'autre sur un axe commun (12a) ; cet embrayage comprenant :

un premier moyen à crabots (58) pouvant se déplacer axialement d'une position de point mort à une position "engagé" avec un second moyen à crabots (28) pour accoupler directement les organes de transmission, en réaction à un mouvement d'engagement du premier moyen à crabots (58) à partir d'une position de point mort sous l'effet d'une force de changement de rapport $(F_o)$ dirigée axialement vers le second moyen à crabots (28) ;
une première surface de friction (48) mobile axialement qui peut venir s'accoupler à une seconde surface de friction (24) sous l'effet du mouvement d'engagement du premier moyen à crabots (58) pour produire un couple de synchronisation $(T_o)$ ;
un moyeu (32) comportant un moyen de liaison avec le premier moyen à crabots (58) pour permettre au premier moyen à crabots (58) de se déplacer axialement par rapport au moyeu (32) solidaire du premier organe de transmission (12) et comprenant une circonférence extérieure ayant plusieurs premières gorges axiales (62) espacées circonférentiellement dans lesquelles se logent et peuvent coulisser de premières dents prolongeant radialement le premier moyen à crabots ;

une première bague d'arrêt (40) comprenant la première surface de friction (48) et plusieurs premières surfaces de blocage (44b), la bague d'arrêt pouvant être écartée axialement du moyeu (32) vers la seconde surface de friction (24) ; des surfaces de blocage (58d) situées sur le premier moyen a crabots (58) pour entrer en contact avec les premières surfaces de friction afin d'empêcher tout accouplement asynchrone entre le premier moyen à crabots (58) et le second moyen à crabots (28) ;

le moyeu (32) présentant une première série de surfaces de moyeu à angle (74a);

plusieurs éléments d'autorenfort (76) sont montés de façon à pouvoir se déplacer avec le premier moyen à crabots (58) et effectuer un mouvement de rotation limité par rapport au moyeu (32), ces éléments étant placés au contact des surfaces de moyeu à angle (74a) pour créer une force axiale supplémentaire ($F_a$) dans le sens de la force de changement de rapport ($F_o$) sous l'effet du couple de la surface de friction (48) transmis par la surface de blocage (44b) de la bague d'arrêt (40), créant ainsi une force axiale sur la surface de friction (48) et un couple de synchronisation supérieurs à ceux résultant de la seule force ($F_o$) ; caractérisé en ce

que le moyeu (32) présente plusieurs secondes gorges axiales intercalées entre les premières gorges (62) et dans lesquelles se logent et peuvent coulisser de secondes dents prolongeant radialement le premier moyen à crabots (58), que les premières et secondes gorges (62,64) contiennent, respectivement, au moins une portion des premières et secondes dents (58,60) quand les blocages (44,58d) sont dans leurs positions de point mort et d'engagement, que les gorges ont une largeur circonférentielle (38a,39a et 38c,39c) par rapport aux dents qu'elles contiennent permettant une rotation relative entre le premier moyen à crabots et le moyeu afin de réaliser l'engagement du moyen d'autorenfort (72,74) au cours du mouvement d'engagement du premier moyen à crabots (58), et qu'une partie (38b,39b) des secondes gorges (64) contient (ajustement fin) les secondes dents (60) lorsque les premier et second moyens à crabots sont accouplés pour empêcher toute rotation entre le premier moyen à crabots et le moyeu.

2. Embrayage selon la revendication 1, caractérisé en ce

que le premier moyen à crabots (58) est solidaire d'un manchon de changement de rapport (34) ayant une longueur axiale, le premier moyen à crabots constituant les premières dents, et où la longueur des premières dents est inférieure à la moitié de la longueur du manchon de changement de rapport.

3. Embrayage selon la revendication 2, caractérisé en ce

que les secondes dents sont solidaires du manchon de changement de rapport (34) et ont une longueur inférieure à la moitié de la longueur du manchon de changement de rapport.

4. Embrayage selon la revendication 1, caractérisé en ce

que les premières gorges ont une largeur circonférentielle d'environ une fois et demi la largeur circonférentielle du premier moyen à crabots (58) lorsque le manchon de changement de rapport est en position de point mort.

5. Embrayage selon la revendication 1, caractérisé en ce

que les premières gorges empêchent la rotation limitée lorsque les secondes dents sont accouplées avec un quatrième moyen à crabots (30) afin de limiter le jeu circonférentiel ou jeu libre entre le premier organe de transmission et un troisième organe de transmission (12,16).

6. Embrayage selon la revendication 1, caractérisé en ce

que les éléments d'autorenfort (76) comprennent :

plusieurs surfaces d'autorenfort (76d) formées sur la circonférence intérieure (34c) du manchon de changement de rapport et espacées entre elles circonférentiellement.

7. Embrayage selon la revendication 1, caractérisé en ce

que le moyeu (32) et au moins l'un des éléments d'autorenfort (76) comprennent chacun une surface sans action de renfort (72c,76e), perpendiculaire au plan de rotation du moyeu et engagée lorsque le premier moyen à crabots est en position de point mort.

8. Embrayage selon la revendication 1, caractérisé en ce

que la première bague d'arrêt (40) comprend un moyen de butée (40b) pour limiter la rotation de la bague d'arrêt (40) par rapport au moyeu (32) et un moyen (42b') pour augmenter la rotation de la bague d'arrêt (40) par rapport au moyeu (32) afin de modifier le contact initial des surfaces de blocage d'un contact initial sensiblement total à un contact initial réduit.

9. Mécanisme d'embrayage selon la revendication 1, comprenant en outre :

un troisième moyen à crabots (60) constitué des secondes dents et pouvant se déplacer axialement d'une position de point mort à une position "engagé" avec le quatrième moyen à crabots (30) pour accoupler directement le premier organe de transmission avec un troisième organe de transmission en réaction au mouvement d'engagement du premier moyen à crabots sous l'effet d'une force axiale de changement de rapport ($F_o$) vers le quatrième moyen à crabots (30) ;

une troisième surface de friction (50) mobile axialement pour venir au contact d'une quatrième surface de friction (26) en réaction au mouvement d'engagement du premier moyen à crabots pour produire un couple de synchronisation ($T_o$) ;

une seconde bague d'arrêt (42) comprenant une troisième surface de friction (50) et plusieurs secondes surfaces de blocage (46b), la bague d'arrêt (42) pouvant être écartée axialement du moyeu (32) vers la quatrième surface de friction (26) ; des surfaces de blocage (60d) sur le second moyen à crabots (60) permettant d'engager les secondes surfaces de blocage pour empêcher un accouplement asynchrone du premier moyen à crabots (60) avec le second moyen à crabots (30) ;

plusieurs éléments d'autorenfort (76) montés de façon à pouvoir se déplacer avec le second moyen à crabots (60) et effectuer un mouvement de rotation limité par rapport au moyeu (32), les éléments (76) étant placés au contact des surfaces de moyeu à angle (74) pour créer une force axiale supplémentaire ($F_a$) dans le sens de la force de changement de rapport ($F_o$) vers le quatrième moyen à crabots (30) sous l'effet du couple de la surface de friction transmis par la surface de blocage (46b) de la bague d'arrêt, créant ainsi une force axiale sur la surface de friction (50) et un couple de synchronisation supérieurs à ceux résultant de la seule force ($F_o$).

FIG I

FIG 3

FIG 4

FIG 4A

FIG 9

FIG 2

EP 0 663 539 B1

FIG 5

FIG 6

FIG 7

FIG 8

EP 0 663 539 B1